# EUROPÄISCHE PATENTSCHRIFT

(11) **EP 2 092 467 B1**
(45) Veröffentlichungstag und Bekanntmachung des Hinweises auf die Patenterteilung: **02.03.2011**
(21) Anmeldenummer: 07819805.8
(22) Anmeldetag: 14.11.2007
(51) Int. Cl.: G06K 19/07, G06K 19/077

(54) **KONTAKTBELEGUNG EINES TRAGBAREN DATENTRÄGERS**
CONTACT ASSIGNMENT OF A PORTABLE DATA CARRIER
ALLOCATION DE CONTACTS D'UN SUPPORT DE DONNÉES PORTATIF

(30) Priorität: 15.11.2006 DE 102006053787
(43) Veröffentlichungstag der Anmeldung: 26.08.2009
(73) Patentinhaber: Giesecke & Devrient GmbH, 81677 München (DE)
(72) Erfinder: HARTEL, Karl Eglof, 80689 München (DE)
(74) Vertreter: Höhfeld, Jochen
(86) Internationale Anmeldenummer: PCT/EP2007/009848
(87) Internationale Veröffentlichungsnummer: WO 2008/058726

(56) Entgegenhaltungen:
- EP-A- 1 632 886
- WO-A-2005/124656
- US-A1- 2005 251 593
- US-A1- 2006 142 063
- US-B1- 6 901 457

## Beschreibung

Die vorliegende Erfindung betrifft ein Verfahren zum Erkennen von an einem Kontaktfeld eines tragbaren Datenträgers anliegenden Kontaktbelegungen sowie einen derartigen portablen Datenträger.

Heutzutage werden vielfältige portable Datenträger verwendet, die ein Nutzer mit sich führen kann, um unterschiedliche Dienstleistungen in Anspruch zu nehmen oder Transaktionen durchzuführen. So werden beispielsweise Chipkarten oder Mobilfunkkarten eingesetzt, um durch eine entsprechende Authentisierung einen Zugang zu gesicherten Bereichen oder Dienstleistungen zu erhalten, z. B. die über ein Mobilfunknetzes bereitgestellten Applikationen eines Mobilfunkanbieters. Je nach Typ und Einsatzart eines solchen Datenträgers wird die Kommunikation zwischen dem Datenträger und einem mit diesem in Kontakt stehenden Endgerät, beispielsweise ein Telekommunikationsendgerät oder ein Bankterminal, über ein geeignetes Kommunikationsprotokoll durchgeführt. Das Endgerät legt hierfür gemäß einer Kontaktbelegung des jeweils verwendeten Kommunikationsprotokolls Signale/Spannungen an die der jeweiligen Kontaktbelegung entsprechenden Kontakte des Kontaktfelds an, die so die physikalische Schnittstelle zwischen dem Endgerät und dem Datenträger bilden. Jedes Kommunikationsprotokoll benötigt hierzu eine vorgegebene individuelle Kontaktbelegung, so dass die Kontakte des Kontaktfelds nicht gleichzeitig für andere Zwecke, z.B. für ein weiteres Kommunikationsprotokoll, zur Verfügung stehen.

Da die Anzahl an Kontaktstellen eines solchen Kontaktfelds und somit die möglichen unterschiedlichen Kontaktbelegungen begrenzt sind, ist auch die Möglichkeit eingeschränkt, eine parallele Kommunikation über mehrere Kommunikationsprotokolle gleichzeitig durchzuführen, da sich aufgrund der in der Regel festgelegten Kontaktbelegungen Überlappungen und insofern Kollisionen an den Kontakten des Kontaktfelds ergeben können. Über ein im Chipkartenbereich verwendetes Kontaktfeld gemäß dem ISO 7816-2 Standard mit acht Kontakten C1 bis C8 werden verschiedene Kommunikationsprotokolle für eine kontaktbehaftete Kommunikation (nachfolgend als "kontaktbehaftete Kommunikationsprotokolle" bezeichnet) eingesetzt, beispielsweise das MMC-Hochgeschwindigkeitsprotokoll ("Multimedia Card"), das die Kontakte C4, C6 und C8 nutzt, oder das USB-Hochgeschwindigkeitsprotokoll ("Universial Serial Bus"), das die Kontakte C4 und C8 einsetzt (vgl. Dokumente SCPt060551 und SCPt060552 des Europäischen Instituts für Telekommunikationsnormen, ETSI).

US 2005/0251593 A1, US 6901457 B1 und EP 1632 886 A1 beschreiben Multi-Protokoll-Speicherkarten, welche mehrere Protokolle unterstützen und erkennen. Dabei ist jeweils einem Protokoll eine Kontaktbelegung zugeordnet. Die Speicherkarte erkennt die Kontaktbelegung oder ein Protokollauswahlsignal und wählt den entsprechenden internen Betriebsmodus.

Darüber hinaus ist auch eine Unterstützung von Kommunikationsprotokollen für eine kontaktlose Kommunikation (nachfolgend als "kontaktlose Kommunikationsprotokolle" bezeichnet) wünschenswert, um parallel zur Nutzung von kontaktbehafteten Kommunikationsprotokollen gleichzeitig oder alternativ auch über eine Funkverbindung kommunizieren zu können. Solche kontaktbehafteten Kommunikationsprotokolle beanspruchen wiederum zusätzliche oder überlappende Kontaktbelegungen des Kontaktfelds. Hierbei besteht jedoch der Nachteil, dass eine technisch mögliche kontaktlose Kommunikation nicht durchgeführt werden kann, weil zumindest einige Kontakte der zugehörigen Kontaktbelegung von einer bereits aktivierten kontaktbehafteten Kommunikation blockiert werden. In diesem Zusammenhang offenbart die WO 2005/ 124656 A1 eine Möglichkeit, ein kontaktbehaftetes Hochgeschwindigkeitsprotokoll und ein kontaktloses Kommunikationsprotokoll mit kollidierenden Kontaktbelegungen zu betreiben. Dazu werden die an dem Datenträger anliegenden Kommunikationsprotokolle erkannt und gemäß bestimmten Prioritätsvorgaben aktiviert bzw. deaktiviert. Es wird von WO 2005/ 124656 A1 als nächstliegendem Stand der Technik ausgegangen.

Demzufolge ist die Aufgabe der vorliegenden Erfindung, eine flexible Kommunikation eines Datenträgers über möglichst viele Kommunikationsprotokolle zu ermöglichen.

Diese Aufgabe wird erfindungsgemäß durch ein Verfahren sowie einen Datenträger mit den Merkmalen der unabhängigen Ansprüche gelöst. Die davon abhängigen Ansprüche beschreiben vorteilhafte Ausgestaltungen und Weiterbildungen der Erfindung.

Bei dem Aufbau einer Kommunikation zwischen einem erfindungsgemäßen Datenträger und einem Endgerät, wird von dem Endgerät zunächst eine Kontaktbelegung gemäß einem von dem Endgerät vorgegebenen Kommunikationsprotokoll an dem Kontaktfeld des Datenträgers angelegt. Der Begriff "Kontaktbelegung eines Kommunikationsprotokolls" wird insofern als diejenige individuelle Gruppe von Kontakten des Kontaktfelds verstanden, auf die ein Endgerät bei der Kommunikation mit dem Datenträger über das Kommunikationsprotokoll zugreift. Sobald die Kontaktbelegung - und damit auch das damit verbundene Kommunikationsprotokoll - von einer Steuereinrichtung des Datenträgers erkannt wird, aktiviert diese die entsprechenden Kontakte des Kontaktfelds, die die als anliegend erkannte Kontaktbelegung bilden, um schließlich auf Veranlassung des Endgeräts eine Kommunikation des Datenträgers mit dem Endgerät über das von diesem vorgegebene Kommunikationsprotokoll zu ermöglichen. Das Kontaktfeld des Datenträgers umfasst hierbei erste Kontakte und von diesen ersten Kontakten vollständig verschiedene zweite Kontakte, wobei die ersten Kontakte eine Kontaktbelegung eines ersten Kommunikationsprotokolls bilden. Kontaktbelegungen weiterer Kommunikationsprotokolle werden vorzugsweise entweder nur aus Kontakten der zweiten Kontakte oder aus Kontakten der ersten und zweiten Kontakte gebildet.

Erfindungsgemäß erkennt die Steuereinrichtung des Datenträgers jede von zwei möglichen an dem Kontaktfeld des Datenträgers anliegenden Kontaktbelegungen eines zweiten Kommunikationsprotokolls. Die erste Kontaktbelegung des zweiten Kommunikationsprotokolls wird dabei anhand eines der zweiten Kontakte erkannt, während die zweite Kontaktbelegung des zweiten Kommunikationsprotokolls anhand eines der ersten Kontakte erkannt wird. Die zweite Kontaktbelegung des zweiten Kommunikationsprotokolls wird hierbei durch den einen der ersten Kontakte und zumindest einen der zweiten Kontakte gebildet, während die erste Kontaktbelegung des zweiten Kommunikationsprotokolls vorzugsweise ausschließlich aus den zweiten Kontakten gebildet wird, so dass die Kontakte der Kontaktbelegung des ersten Kommunikationsprotokolls und diejenigen der ersten Kontaktbelegung des zweiten Kommunikationsprotokolls nicht kollidieren.

Dadurch wird eine selektive Aktivierung von Kontakten in Abhängigkeit der anliegenden Kontaktbelegung durch die Steuereinrichtung ermöglicht. Weil die Steuereinrichtung insbesondere imstande ist, zwei verschiedene von einem Endgerät an das Kontaktfeld des Datenträgers angelegte Kontaktbelegungen des zweiten Kommunikationsprotokolls zu erkennen, ist eine maximale Flexibilität in Hinblick auf eine Kommunikation des Endgeräts mit dem Datenträger über das zweite Kommunikationsprotokoll gewährleistet.

Zusätzlich kann die Steuereinrichtung eine an dem Kontaktfeld anliegende Kontaktbelegung eines dritten Kommunikationsprotokolls, die zumindest einen Kontakt mit der ersten Kontaktbelegung des zweiten Kommunikationsprotokolls gemeinsam hat, anhand eines der zweiten Kontakte erkennen. Ebenso wird eine an dem Kontaktfeld anliegende Kontaktbelegung des ersten Kommunikationsprotokolls anhand zumindest eines der ersten Kontakte erkannt, der vorzugsweise derselbe Kontakt ist, anhand dessen auch die zweite Kontaktbelegung des zweiten Kommunikationsprotokolls erkannt wird. Abhängig von der als an dem Kontaktfeld anliegend erkannten Kontaktbelegung aktiviert die Steuereinrichtung die entsprechenden Kontakte, die die betreffende Kontaktbelegung bilden. Hierbei können auch zwei Kontaktbelegungen gleichzeitig aktiviert sein, wenn z.B. zwei Kommunikationsverbindungen über verschiedene Kommunikationsprotokolle von dem gleichen oder verschiedenen Endgeräten zu dem Datenträger bestehen. Deshalb aktiviert die Steuereinrichtung die Kontakte einer Kontaktbelegung nur dann, wenn diese Kontakte nicht bereits im Rahmen einer anderen Kontaktbelegung eines anderen Kommunikationsprotokolls aktiviert sind. Auf diese Weise werden Kollisionen an den Kontakten des Kontaktfelds bei gleichzeitiger Nutzung verschiedener Kommunikationsprotokolle vermieden.

Durch diese gesteuerte Aktivierung von Kontakten bestimmter Kontaktbelegungen in Abhängigkeit von anderen der Steuereinrichtung bekannten Kontaktbelegungen ist es z.B. auch möglich, die Kontakte der ersten Kontaktbelegung des zweiten Kommunikationsprotokolls parallel zu denjenigen der Kontaktbelegung des ersten Kommunikationsprotokolls nur dann zu aktivieren, wenn die Kontakte der ersten Kontaktbelegung des zweiten Kommunikationsprotokolls nicht mit denjenigen der Kontaktbelegung des dritten Kommunikationsprotokolls kollidieren.

Ein erfindungsgemäßer portabler Datenträger umfasst vorzugsweise ein Kontaktfeld gemäß ISO 7816-2, wobei der C2-Kontakt, C3-Kontakt und C7-Kontakt des Kontaktfelds die ersten Kontakte bilden und der C4-Kontakt, C6-Kontakt und C8-Kontakt die zweiten Kontakte bilden. Zur Kommunikation über die jeweiligen Kommunikationsprotokolle umfasst der Datenträger weiterhin vorzugsweise je eine Schnittstelleneinrichtung für jedes Kommunikationsprotokoll, dessen Kontaktbelegung die Steuereinrichtung erkennen kann. Die zu aktivierenden Kontakte einer als anliegend erkannten Kontaktbelegung werden von der Steuereinrichtung aktiviert, indem die betreffende Schnittstelleneinrichtung aktiviert wird, die dann eine Kommunikationsverbindung über die Kontakte aufbaut, die die an dem Kontaktfeld anliegende Kontaktbelegung bilden.

Vorzugsweise umfasst der Datenträger Schnittstelleneinrichtungen, die eine Kommunikation mit einem Endgerät gemäß jeweils einem kontaktbehafteten Kommunikationsprotokoll über die Kontakte einer an dem Kontaktfeld anliegenden Kontaktbelegung unterstützen (nachfolgend als "Kontakt-Schnittstelleneinrichtung" bezeichnet), sowie zumindest eine weitere Schnittstelleneinrichtung, die eine Kommunikation mit einem Endgerät gemäß einem kontaktlosen Kommunikationsprotokoll unterstützt (nachfolgend als "Kontaktlos-Schnittstelleneinrichtung" bezeichnet). So ist es beispielsweise möglich, dass das erste und das zweite Kommunikationsprotokoll jeweils kontaktbehaftete Kommunikationsprotokolle sind und das dritte Kommunikationsprotokoll ein kontaktloses Kommunikationsprotokoll ist. Wenn dann während einer Kommunikation zwischen dem Datenträger und einem Endgerät über das kontaktbehaftete erste Kommunikationsprotokoll mittels einer ersten Kontakt-Schnittstelleneinrichtung eine an dem Kontaktfeld anliegende Kontaktbelegung des kontaktbehafteten zweiten Kommunikationsprotokolls erkannt wird, aktiviert die Steuereinrichtung die entsprechende zweite Kontakt-Schnittstelleneinrichtung, sofern es keine Kollision zwischen den von der zweiten Kontakt-Schnittstelleneinrichtung genutzten Kontakten und den von der Kontaktlos-Schnittstelleneinrichtung genutzten Kontakten gibt. Die zweite Kontakt-Schnittstelleneinrichtung wird demzufolge nur aktiviert, wenn auch nach deren Aktivierung weiterhin diejenigen Kontakte frei bleiben, die von der Kontaktlos-Schnittstelleneinrichtung zur Kommunikation über das kontaktlose dritte Kommunikationsprotokoll genutzt werden. Dadurch wird eine hohe Verfügbarkeit des Datenträgers für die kontaktlose Kommunikation sichergestellt.

Der oben beschriebene Prozess wird vorzugsweise beim Einschalten des portablen Datenträgers durchgeführt, d.h. im Rahmen seiner Initialisierungs- oder Hochfahrsequenz, bei der an dem Kontaktfeld anliegende Kommunikationsverbindungen geprüft werden. Die betreffenden Schnittstelleneinrichtungen werden von der Steuereinrichtung dann - nach Maßgabe der Ergebnisse der Kollisionsprüfungen - vorzugsweise sequenziell aktiviert. Die Kollisionsprüfungen werden von der Steuereinrichtung durchgeführt, indem eine von dem Endgerät an einzelne Kontakte des Kontaktfelds angelegte Spannung überwacht wird und daraus auf eine Kontaktbelegung eines Kommunikationsprotokolls geschlossen wird.

Falls es sich bei dem dritten Kommunikationsprotokoll um das für die Nahfeldkommunikation einzusetzende kontaktlose SWP-Kommunikationsprotokoll ("Single Wire Protokoll") handelt, kann dessen Kontaktbelegung anhand einer Spannungsmodulation an dem C6-Kontakt des Kontaktfelds gemäß ISO 7816-2 erkannt werden, da ein SWP-Signal im Gegensatz zu den Taktsignalen von kontaktbehafteten Kommunikationsprotokollen pulsbreitenmoduliert ist.

Falls das kontaktbehaftete zweite Kommunikationsprotokoll ein MMC-Kommunikationsprotokoll ("Multimedia Card") ist, dessen erste Kontaktbelegung durch die ersten Kontakte C4, C6 und C8 und dessen zweite Kontaktbelegung durch die Kontakte C3, C4 und C8 gebildet wird, kann die Steuereinrichtung das MMC-Kommunikationsprotokoll prinzipiell anhand eines hohen Spannungspegels an dem C4-Kontakt und/oder dem C8-Kontakt des Kontaktfelds erkennen, der in der Initialisierungsphase des MMC-Kommunikationsprotokolls angelegt wird. Alternativ oder zusätzlich kann das MMC-Kommunikationsprotokoll auch dadurch erkannt werden, dass über den C4-Kontakt und/ oder den C8-Kontakt ein bestimmtes MMC-Initialisierungssignal eingeht, z.B. das CMD1-Signal gemäß der Spezifikation MMC 4.1 des MMC-Kommunikationsprotokolls. Abhängig davon, ob das Signal synchron mit einem an C3 oder an C6 anliegenden Takt eingeht, kann erkannt werden, welche der beiden möglichen Kontaktbelegungen des MMC-Kommunikationsprotokolls tatsächlich an dem Kontaktfeld anliegt und diese aktiviert werden.

Falls es sich bei dem ersten Kommunikationsprotokoll um das kontaktbehaftete ISO-Kommunikationsprotokoll handelt, erkennt die Steuereinrichtung dessen Kontaktbelegung beispielsweise daran, dass an dem C3-Kontakt ein Taktsignal anliegt und ein an dem C2-Kontakt anliegender Spannungspegel im Rahmen einer normalen Initialisierungssequenz der ISO-Schnittstelleneinrichtung von "niedrig" nach "hoch" bzw. 0 nach 1 geändert wird. Die Steuereinrichtung aktiviert dann die Kontakte C2, C3 und C7, die die Kontaktbelegung des ISO-Kommunikationsprotokolls bilden.

Die vorliegende Erfindung ermöglicht also, das kontaktlose SWP-Protokoll über den C6-Kontakt gleichzeitig mit zumindest einem kontaktbehafteten Kommunikationsprotokoll zu betreiben, z.B. mit dem MMC-Protokoll (über C3 für das Taktsignal und C4, C8) oder mit dem ISO-Protokoll (über C2, C3, C8). Falls über das Kontaktfeld des portablen Datenträgers bereits eine kontaktbehaftete Kommunikation über das ISO-Protokoll und eine kontaktlose Kommunikation über das SWP-Protokoll durchgeführt werden, kann z.B. das USB-Protokoll, dessen Kontaktbelegung durch die Kontakte C4, und C8 gebildet wird, zusätzlich aktiviert werden, nicht aber das MMC-Protokoll. Darüber hinaus ist das auf dem MMC-Standard basierende SD-Kommunikationsprotokoll zur kontaktbehafteten Kommunikation in die vorliegende Erfindung integrierbar.

Neben der kontaktlosen Nahfeldkommunikation über das SWP-Protokoll können auch andere Funkkommunikationen in die vorliegende Erfindung integriert werden, z.B. Kommunikationsprotokolle für RFID ("Radio Frequency Identification"), BlueTooth, WiFi ("Wireless Fidelity") und dergleichen, die wiederum individuelle Kontaktbelegungen des Kontaktfelds gemäß ISO 7816-2 verwenden können. Darüber hinaus ist es prinzipiell möglich, die vorliegende Erfindung auf beliebige mehrfeldrige Kontaktfelder als Kontaktschnittstellen zwischen Kommunikationsgeräten anzuwenden. Die Erfindung ist jedoch primär für den Einsatz bei einem Datenträger mit einem Kontaktfeld gemäß ISO 7816-2 gedacht. Als portable Datenträger kommen hier insbesondere Chipkarten, Smart Cards, Mobilfunkkarten und dergleichen in Frage.

Weitere Merkmale und Vorteile der Erfindung ergeben sich aus der folgenden Beschreibung verschiedener erfindungsgemäßer Ausführungsbeispiele sowie weiterer Ausführungsalternativen im Zusammenhang mit den begleitenden Zeichnungen. Darin zeigen:
- Fig. 1: eine Chipkarte mit einer erfindungsgemäßen Steuereinrichtung;
- Fig. 2: eine schematische Darstellung einer gleichzeitigen Aktivierung des MMC- und des SWP-Kommunikationsprotokolls;
- Fig. 3: Kontaktbelegungen bei gleichzeitiger Aktivierung eines ISO- und eines SWP- Kommunikationsprotokolls;
- Fig. 4: Kontaktbelegungen bei gleichzeitiger Aktivierung eines MMC- und eines SWP- Kommunikationsprotokolls; und
- Fig. 5: Kontaktbelegungen bei gleichzeitiger Aktivierung eines ISO-, eines USB- und eines SWP- Kommunikationsprotokolls.

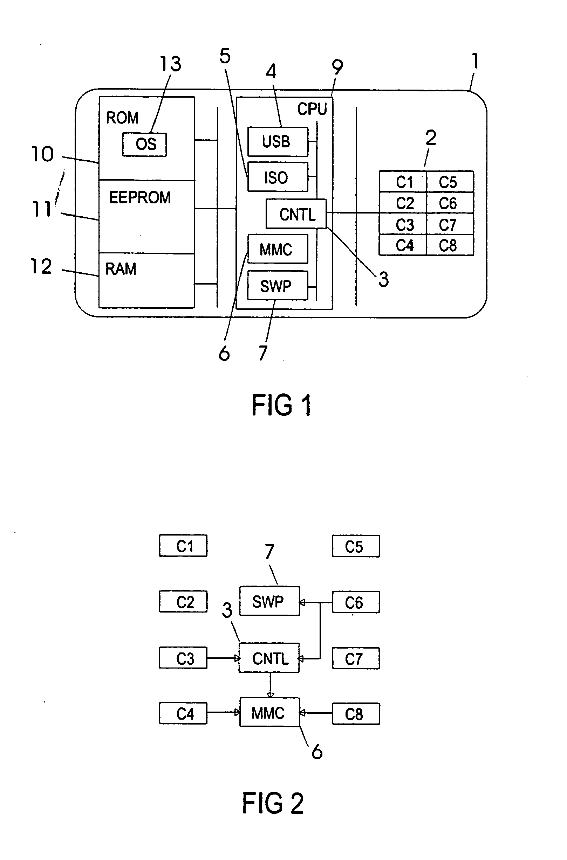

Das achtfeldrige Kontaktfeld gemäß ISO 7816-2 ist dafür vorgesehen, bei Chipkarten, Smart Cards, Mobilfunkkarten und dergleichen über individuelle Kontaktbelegungen physikalische Schnittstellen für verschiedene Kommunikationsprotokolle bereitzustellen. Eine Chipkarte 1 mit einem solchen Kontaktfeld 2 ist in Figur 1 gezeigt. Das Kontaktfeld gemäß ISO 7816-2 besteht aus den Kontakten C1 bis C8, wobei C1 für eine Versorgungsspannung (V+) der Chipkarte und C5 als Masse (GND) vorgesehen ist. Die Kontakte C2, C3 und C7 bilden eine Gruppe erster Kontakte, die aus der Kontaktbelegung des kontaktbehafteten ISO-Kommunikationsprotokolls resultiert, und die verbleibenden Kontakte C4, C6 und C8 bilden eine Gruppe zweiter Kontakte.

Abhängig von dem jeweiligen Kommunikationsprotokoll, das ein mit der Chipkarte 1 in Kontakt stehendes Endgerät, beispielsweise ein Mobiltelefon, ein Bankterminal oder eine sonstige stationäre oder portable elektronische Kommunikationsvorrichtung, in einer Initialisierungs- oder Startphase der Chipkarte 1 vorgibt, werden von dem Endgerät bestimmte Kontaktbelegungen an das Kontaktfeld der Chipkarte 1 angelegt. Die Kommunikation wird dann von einer entsprechenden, von einer Steuereinrichtung 3 der Chipkarte 1 aktivierten Schnittstelleneinrichtung 4 - 7 durchgeführt, die genau auf diejenigen Kontakte zugreift, die die Kontaktbelegung des betreffenden Kommunikationsprotokolls bilden. Bei der Vielzahl von heute eingesetzten Kommunikationsprotokollen besitzt das Kontaktfeld gemäß ISO 7816 nicht genug einzelne Kontakte, um beliebige Kommunikationsprotokolle gleichzeitig betreiben zu können.

Die Chipkarte 1 umfasst desweiteren einen Prozessor 9 (CPU), der ein Betriebssystem 13 (OS) und weitere Applikationen, z.B. die Schnittstelleneinrichtungen 4 - 7, ausführt, sowie eine Speicheranordnung, bestehend aus einem permanenten ROM-Speicher 10, einen nicht-flüchtigen EEPROM-Speicher 11 und einem flüchtigen RAM-Arbeitsspeicher 12.

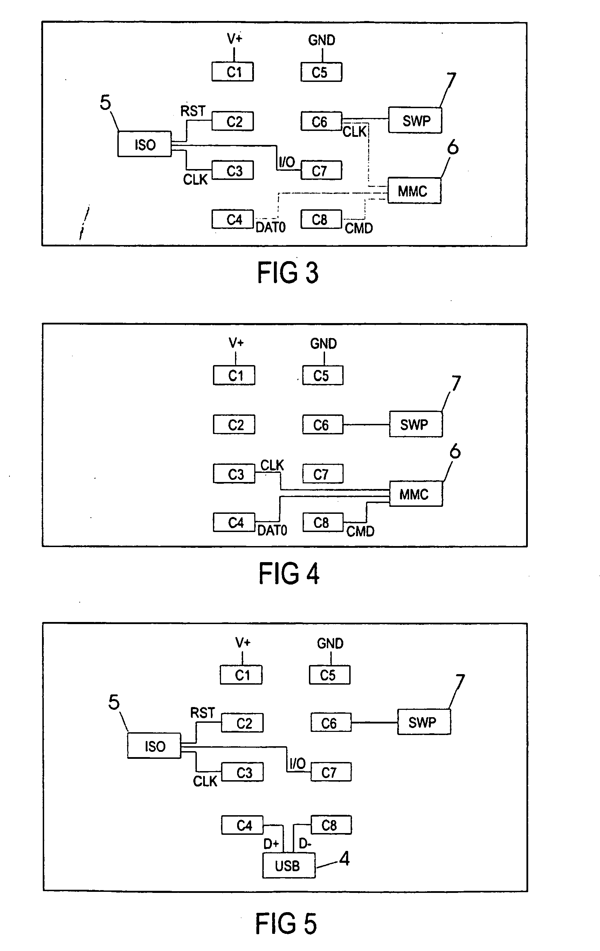

Ein gängiges Kommunikationsprotokoll für die Kommunikation über ein Kontaktfeld gemäß ISO 7816-2 ist das von einer ISO-Schnittstelleneinrichtung 5 bereitgestellte kontaktbehaftete ISO-Kommunikationsprotokoll, dessen Kontaktbelegung durch die Gruppe der ersten Kontakte C2, C3 und C7 gebildet wird (vgl. Fig. 3 und 5). Darüber hinaus werden zunehmend die kontaktbehafteten Hochgeschwindigkeitsprotokolle MMC ("Multimedia Card") und USB ("Universal Serial Bus") eingesetzt, deren entsprechende Schnittstelleneinrichtungen 4,6 zur Kommunikation gemäß dem MMC-Protokoll oder USB-Protokoll standardmäßig ausschließlich Kontakte der Gruppe der zweiten Kontakte C4, C6 und C8 nutzen, die nicht mit den von der ISO-Schnittstelleneinrichtung 5 genutzten Kontakten kollidieren. Die MMC-Schnittstelleneinrichtung 6 greift zur Kommunikation gemäß einer ersten (standardmäßigen) Kontaktbelegung des MMC-Protokolls auf die Kontakte C4, C6 und C8 zu, während die USB-Schnittstelleneinrichtung 4 zur Kommunikation gemäß der Kontaktbelegung des USB-Protokolls auf die Kontakte C4 und C8 zugreift, so dass die Kontaktbelegungen der beiden Hochgeschwindigkeitsprotokolle USB und MMC bezüglich der Kontakte C4 und C8 kollidieren. Darüberhinaus können auch andere kontaktbehaftete Kommunikationsprotokolle eingesetzt werden, z.B. das auf dem MMC-Protokoll basierende SD-Protokoll, das bei SD-Speicherkarten ("Secure Digital Card") eingesetzt wird.

Neben diesen auf eine kontaktbehaftete Kommunikation abgestimmten Protokollen werden bei Chipkarten auch zunehmend Kommunikationsprotokolle für eine kontaktlose Kommunikation eingesetzt, die weitere Kontaktbelegungen des Kontaktfelds gemäß ISO 7816-2 beanspruchen. In diesem Zusammenhang sind insbesondere solche Kommunikationsprotokolle zu nennen, die bei der Nahfeldkommunikation der Chipkarte mit einem Endgerät über Funk- bzw. Hochfrequenzsignale eingesetzt werden. Beispielhaft für derartige kontaktlose Kommunikationsprotokolle wird nachfolgend von dem SWP-Protokoll ausgegangen, dessen Kontaktbelegung durch den C6-Kontakt der Gruppe der zweiten Kontakte gebildet wird. Das erfindungsgemäße Prinzip kann aber unmittelbar auf jedes andere kontaktlose Kommunikationsprotokoll übertragen werden, über das ein portabler Datenträger, wie z. B. einer Chipkarte oder Smart Card, eine kontaktlose Kommunikation mit einem Endgerät, Terminal oder dergleichen durchführen kann. So können beispielsweise auch andere kontaktlose Kommunikationsprotokolle eingesetzt werden, die z.B. auf eine Funkkommunikation über eine BlueTooth-Schnittstelle, über die WiFi-Technologie ("Wireless Fidelity") oder über RFID ("Radio Frequency Identification") abgestimmt sind.

Um eine möglichst hohe Verfügbarkeit der Chipkarte 1 im Hinblick auf eine kontaktlose Nahfeldkommunikation über das SWP-Protokoll sicherzustellen und zu ermöglichen, dass eine kontaktlose Kommunikation gemäß dem SWP-Protokoll gleichzeitig mit einer kontaktbehafteten Kommunikation gemäß zumindest einem der kontaktbehafteten Protokolle durchgeführt werden kann, umfasst die Chipkarte 1 eine Steuereinrichtung 3 (CNTL), die an einzelnen Kontakten des Kontaktfelds 2 anliegende Spannungen prüft und daraus verschiedene von Endgeräten an das Kontaktfeld angelegte Kontaktbelegungen entsprechender Kommunikationsprotokolle ermitteln kann. Auf diese Weise erkennt die Steuereinrichtung 3 mögliche Kollisionen bezüglich einzelnen Kontakte, auf welche die verschiedenen Schnittstelleneinrichtungen 4, 5, 6, 7 gemäß einer an dem Kontaktfeld 2 anliegenden Kontaktbelegung zugreifen, und aktiviert die betreffende Schnittstelleneinrichtungen so, dass neben ihr zumindest auch eine Schnittstelleneinrichtung 7 zur kontaktlosen Kommunikation potentiell aktiv sein kann.

Dadurch wird insbesondere erreicht, dass der Kontakt C6, der von der SWP-Schnittstelleneinrichtung zur Nahfeldkommunikation benötigt wird, für das SWP-Protokoll zur Verfügung steht, so dass eine einheitliche Lösung zur Realisierung einer parallelen Nahfeldkommunikation mit einer Chipkarte 1 besteht. Die Steuereinrichtung 3 ermöglicht, dass die SWP-Schnittstelleneinrichtung 7 gleichzeitig mit zumindest einer der in Figur 1 gezeigten USB-, ISO-, MMC-Schnittstelleneinrichtungen 4, 5, 6 betrieben werden kann und sie von der Steuereinrichtung 3 gegenüber einer zweiten zu aktivierenden Kontakt-Schnittstelleneinrichtung 4, 5, 6 bevorzugt wird. Darüber können auch weitere Schnittstelleneinrichtungen und deren Protokolle, wie z. B. das kontaktbehaftete SD-Protokoll oder weitere kontaktlose Protokolle, über die Steuereinrichtung 3 kollisionsfrei aktiviert werden.

Die Kollisionsprüfung und kontrollierte Aktivierung von Schnittstelleneinrichtungen 4, 5, 6, 7 durch die Steuereinrichtung 3 kann insbesondere im Zusammenhang mit den konkurrierenden Kontaktbelegungen des kontaktbehafteten MMC-Protokolls und des kontaktlosen SWP-Protokolls vorteilhaft eingesetzt werden. Hierzu führt die in Figur 2 gezeigte Steuereinrichtung 3 im Rahmen der Hochfahr-/Initialisierungssequenz beim Einschalten der Chipkate 1 eine adaptive Takterkennung an den Kontakten C3 und C6 durch, um zu ermitteln, ob an einem dieser Kontakte ein Taktsignal des MMC-Protokolls anliegt. Falls das Taktsignal an dem C3-Kontakt anliegt, erkennt die Steuereinrichtung 3 die zweite (alternative) Kontaktbelegung des MMC-Protokolls, deren Kontakte nicht mit dem Kontakt C6 der Kontaktbelegung des SWP-Protokolls kollidieren. Falls das Taktsignal an dem C6-Kontakt ermittelt wird, erkennt die Steuereinrichtung, dass ein Endgerät die erste (standardmäßige) Kontaktbelegung des MMC-Protokolls an das Kontaktfeld 3 angelegt hat. Hierbei stellt in jedem Falle das Endgerät sicher, dass in dieser Phase nur einer der beiden Kontakte C3 oder C6 ein Taktsignal und der jeweils andere einen konstanten Spannungspegel führt. Die Chipkarte 1 reagiert also lediglich auf die von dem Endgerät angelegte Kontaktbelegung, kann diese aber in keiner Weise beeinflussen.

Zur Erkennung, ob überhaupt eine Kontaktbelegung des MMC-Kommunikationsprotokolls an dem Kontaktfeld 2 anliegt, prüft die Steuereinrichtung 3 zunächst die an dem Kontakt C4 und/oder C8 anliegende Spannung. Wenn an einem oder beiden Kontakten ein erhöhter Spannungspegel festgestellt wird, kann die Steuereinrichtung 3 von einem MMC-Protokoll ausgehen. Ebenso kann die Steuereinrichtung 3 von einem anliegenden MMC-Protokoll ausgehen, wenn über den C8-Kontakt ein CMD1-Signal eingeht, das gemäß der Spezifikation MMC 4.1 in der Initialisierungsphase des MMC-Protokolls gesendet wird. Zur Erkennung der tatsächlich anliegenden Kontaktbelegung des MMC-Protokolls überprüft die Steuereinrichtung 3 wie oben beschrieben, ob der Takt für das MMC-Protokoll an dem C3-Kontakt oder an dem C6-Kontakt anliegt. Falls die zweite Kontaktbelegung des MMC-Protokolls mit dem Taktsignal auf C3 anliegt, wird die MMC-Schnittstelleneinrichtung 6 mit dem Kontakten C3, C4, C8 aktiviert. Der Kontakt C6 bleibt dann für die SWP-Schnittstelleneinrichtung 7 zur Kommunikation gemäß dem SWP-Protokoll frei.

Diese zweistufige Erkennung der tatsächlich anliegenden Kontaktbelegung des MMC-Protokolls ist jedoch nicht prinzipiell notwendig, da die erste Kontaktbelegung des MMC-Protokolls (Takt auf C6) von dem SWP-Protokoll durch dessen Pulsbreitenmodulation auf C6 unterschieden werden kann, während die zweite Kontaktbelegung des MMC-Protokolls (Takt auf C3) von der Kontaktbelegung des ISO-Protokolls, die ebenfalls den Takt auf C3 vorsieht, durch eine zusätzliche Pegeländerung auf C2 unterschieden werden kann.

Wenn die MMC-Schnittstelleneinrichtung 6 als Kontakt-Schnittstelleneinrichtung von der Steuereinrichtung 3 aktiviert wird, wird, solange eine Versorgungsspannung anliegt, der Kontakt, an dem das Taktsignal des MMC-Protokolls anliegt (C3 oder C6), fest als Taktquelle für die MMC-Schnittstelleneinrichtung 6 verwendet. Kontakte, die nicht dazu beitragen, die betreffende erste oder zweite Kontaktbelegung des MMC-Protokolls zu bilden, insbesondere der C3-Kontakt bei einer anliegenden ersten MMC-Kontaktbelegung (Takt auf C6) oder der C6-Kontakt bei einer anliegenden zweiten MMC-Kontaktbelegung (Takt auf C3), können ab diesem Zeitpunkt für ein anderes Kommunikationsprotokoll verwendet werden, z.B. für ein kontaktloses Protokoll. Die beiden möglichen Kontaktbelegungen des MMC-Protokolls sind in den Figuren 3 und 4 dargestellt, in denen die Kontaktbelegung für das MMC-Protokoll den Takt (CLK) auf C3 (Fig. 4; zweite MMC-Kontaktbelegung) bzw. auf C6 (Fig. 3, strichliniert; erste MMC-Kontaktbelegung) hat und auf C4 ein DAT0-Signa und auf C8 ein CMD-Signal führt.

Ein anliegendes ISO-Kommunikationsprotokoll wird von der Steuereinrichtung 3 an einem an C3 anliegenden Taktsignal erkannt, wobei die Abgrenzung zum MMC-Protokoll in einer Änderung des Spannungspegels an C2 von 0 (niedrig) auf 1 (erhöht) im Rahmen der Initialisierungssequenz des ISO-Protokolls besteht. Die Steuereinrichtung 3 aktiviert dann die ISO-Schnittstelleneinrichtung 5, die den Kontakt C3 als Taktleitung (CLK), C2 als eine Reset-Leitung (RST) und C7 für eine Ein-/Ausgangsdatenleitung (I/O) nutzt.

Figur 3 zeigt die Kontaktbelegungen einer gleichzeitig aktivierten kontaktbehafteten ISO-Schnittstelleneinrichtung und kontaktlosen SWP-Schnittstelleneinrichtung. Die übliche (erste) Kontaktbelegung des MMC-Protokolls mit dem Taktsignal auf C6 kollidiert zwar nicht mit derjenigen des ISO-Protokolls, wohl aber mit dem SWP-Protokoll, dessen Signal auf dem Kontakt C6 anliegt.

Figur 5 zeigt, dass ein gleichzeitiger Betrieb der ISO-Schnittstelleneinrichtung 5, der USB-Schnittstelleneinrichtung 4 sowie der SWP-Schnittstelleneinrichtung 7 möglich ist, da diese drei Protokolle wechselseitig unterschiedliche Kontaktbelegungen verwenden. Das USB-Protokoll führt bei seiner Initialisierungssequenz auf C4 und C8 eine Nullspannung, durch die das USB-Protokoll von dem MMC-Protokoll unterschieden werden kann, welches auf diesen Kontakten einen erhöhten Spannungspegel führt. Durch die Nullspannung auf C4 und/oder C8 oder durch spezielle USB-Initialisierungssignale auf C4 (D+) oder C8 (D-) im Rahmen der USB-Initialisierungssequenz wird eine an dem Kontaktfeld 2 anliegende Kontaktbelegung des USB-Protokolls von der Steuereinrichtung 3 erkannt und die USB-Schnittstelleneinrichtung 4 aktiviert. Da die Kontaktbelegung der USB-Schnittstelleneinrichtung 4 mit derjenigen der MMC-Schnittstelleneinrichtung 6 kollidiert und somit eine zusätzliche Aktivierung der MMC-Schnittstelleneinrichtung 6 nicht möglich ist, bleibt C6 für das SWP-Protokoll frei. Die USB- und die ISO-Schnittstelleneinrichtung 4, 5 können also gleichzeitig aktiviert sein, da keine dieser beiden Kontakt-Schnittstelleneinrichtungen den Kontakt C6 benötigt und insofern eine kontaktlose Kommunikation der Chipkarte 1 mit einem Endgerät möglich bleibt.

Ein an dem Kontaktfeld 2 anliegendes SWP-Protokoll ist grundsätzlich anhand einer Spannungsmodulation an dem Kontakt C6 erkennbar, da das SWP-Signal im Gegensatz zu den ansonsten am Kontakt C6 anliegenden Taktsignalen des kontaktbehafteten MMC-Protokolls pulsbreitenmoduliert und insofern von einem MMC-Taktsignal auf C6 unterscheidbar ist. Selbstverständlich kann die Steuereinrichtung 3 auch eine ausschließliche Aktivierung der SWP-Schnittstelleneinrichtung 7 vornehmen, falls kein kontaktbehaftetes Kommunikationsprotokoll anliegt, z.B. wenn die Stromversorgung des Endgeräts nicht funktioniert und die Stromversorgung der Chipkarte 1 über einen Nahfeldkommunikations-Controller erfolgt.

## Patentansprüche

1. Verfahren zum Erkennen einer an einem Kontaktfeld (2) eines portablen Datenträgers (1) anliegenden Kontaktbelegung eines zweiten Kommunikationsprotokolls, wobei das Kontaktfeld (2) erste Kontakte (C2, C3, C7), die eine Kontaktbelegung eines ersten Kommunikationsprotokolls bilden, und von den ersten Kontakten (C2, C3, C7) verschiedene zweite Kontakte (C4, C6, C8) umfasst, umfassend den Schritt des
- Erkennens einer an dem Kontaktfeld (2) anliegenden ersten Kontaktbelegung des zweiten Kommunikationsprotokolls anhand eines der zweiten Kontakte (C6),
**gekennzeichnet durch** den Schritt des
- Erkennens einer an dem Kontaktfeld (2) anliegenden zweiten Kontaktbelegung des zweiten Kommunikationsprotokolls anhand eines der ersten Kontakte (C3), wobei die zweite Kontaktbelegung **durch** den einen der ersten Kontakte (C3) und zumindest einen der zweiten Kontakte (C4, C8) gebildet wird.

2. Verfahren nach Anspruch 1, **gekennzeichnet durch** den Schritt des Erkennens einer an dem Kontaktfeld (2) des Datenträgers (1) anliegenden Kontaktbelegung eines dritten Kommunikationsprotokolls anhand eines der zweiten Kontakte (C6), wobei die anliegende Kontaktbelegung des dritten Kommunikationsprotokolls zumindest einen Kontakt (C6) mit der ersten Kontaktbelegung des zweiten Kommunikationsprotokolls gemeinsam hat.

3. Verfahren nach Anspruch 1 oder 2, **dadurch gekennzeichnet, dass** die Kontakte, die eine als an dem Kontaktfeld (2) anliegend erkannte Kontaktbelegung eines der Kommunikationsprotokolle bilden, aktiviert werden, wenn diese Kontakte nicht mit bereits aktivierten Kontakten kollidieren, die eine andere anliegende Kontaktbelegung eines anderen der Kommunikationsprotokolle bilden.

4. Verfahren nach Anspruch 3, **dadurch gekennzeichnet, dass** die Kommunikationsprotokolle kontaktbehaftete und zumindest ein kontaktloses Kommunikationsprotokoll umfassen, und, während Kontakte aktiviert sind, die eine Kontaktbelegung eines kontaktbehafteten Kommunikationsprotokolls bilden, andere Kontakte, die eine als an dem Kontaktfeld anliegend erkannte andere Kontaktbelegung eines anderen kontaktbehafteten Kommunikationsprotokolls bilden, nur dann aktiviert werden, wenn diese anderen Kontakte nicht mit Kontakten kollidieren, die eine Kontaktbelegung eines kontaktlosen Kommunikationsprotokolls bilden.

5. Verfahren nach einem der Ansprüche 1 bis 4, **dadurch gekennzeichnet, dass** das Kontaktfeld (2) des Datenträgers (1) ein Kontaktfeld (2) gemäß ISO 7816-2 ist, dessen C2-Kontakt, C3-Kontakt und C7-Kontakt die ersten Kontakte bilden und dessen C4-Kontakt, C6-Kontakt und C8-Kontakt die zweiten Kontakte bilden, wobei eine an dem Kontaktfeld (2) anliegende Kontaktbelegung eines der Kommunikationsprotokolle durch Überwachen einer Spannung von bestimmten Kontakten des Kontaktfelds (2) nach dem Einschalten des portablen Datenträgers (1) erkannt wird.

6. Verfahren nach Anspruch 5 mit 2, **dadurch gekennzeichnet, dass** das dritte Kommunikationsprotokoll ein kontaktloses SWP-Kommunikationsprotokoll ist, dessen Kontaktbelegung anhand einer Spannungsmodulation an dem C6-Kontakt des Kontaktfelds (2) erkannt wird.

7. Verfahren nach Anspruch 5 oder 6, **dadurch gekennzeichnet, dass** das erste Kommunikationsprotokoll ein kontaktbehaftetes ISO-Kommunikationsprotokoll ist, dessen Kontaktbelegung anhand des C3-Kontakts und des C2-Kontakts erkannt wird.

8. Verfahren nach einem der Ansprüche 5 bis 7, **dadurch gekennzeichnet, dass** das zweite Kommunikationsprotokoll ein kontaktbehaftetes MMC-Kommunikationsprotokoll ist, dessen erste Kontaktbelegung anhand eines an dem C6-Kontakt des Kontaktfelds (2) anliegenden Taktsignals des MMC-Kommunikationsprotokolls erkannt wird und dessen zweite Kontaktbelegung anhand eines an dem C3-Kontakt des Kontaktfelds (2) anliegenden Taktsignals des MMC-Kommunikationsprotokolls erkannt wird.

9. Verfahren nach einem der Ansprüche 5 bis 7, **dadurch gekennzeichnet, dass** das zweite Kommunikationsprotokoll ein kontaktbehaftetes MMC-Kommunikationsprotokoll ist, dessen erste Kontaktbelegung anhand der korrekten Dekodierung eines an C4 oder C8 eingehenden Signals erkannt wird, wenn dieses synchron mit dem an dem C6-Kontakt des Kontaktfelds (2) anliegenden Taktsignal abgetastet wird und dessen zweite Kontaktbelegung anhand der korrekten Dekodierung eines an C4 oder C8 eingehenden Signals erkannt wird, wenn dieses synchron mit dem an dem C3-Kontakt des Kontaktfelds (2) anliegenden Taktsignal abgetastet wird.

10. Verfahren nach Anspruch 8 oder 9, **dadurch gekennzeichnet, dass** der C4-Kontakt, der C8-Kontakt und der C6-Kontakt für das Taktsignal als die die erste Kontaktbelegung des MMC-Kommunikationsprotokolls bildenden Kontakte aktiviert werden, wenn die erste Kontaktbelegung des MMC-Kommunikationsprotokolls als einzige an dem Kontaktfeld (2) anliegende Kontaktbelegung erkannt wird.

11. Verfahren nach Anspruch 8, 9 oder 10, **dadurch gekennzeichnet, dass** der C4-Kontakt, der C8-Kontakt und der C3-Kontakt für das Taktsignal als die die zweite Kontaktbelegung des MMC-Kommunikationsprotokolls bildenden Kontakte aktiviert werden, wenn die zweite Kontaktbelegung des MMC-Kommunikationsprotokolls als an dem Kontaktfeld (2) anliegende Kontaktbelegung erkannt wird.

12. Verfahren nach einem der Ansprüche 1 bis 11, **dadurch gekennzeichnet, dass** das Verfahren auf einer Chipkarte als portablem Datenträger (1) ausgeführt wird.

13. Tragbarer Datenträger (1), umfassend ein Kontaktfeld (2), das erste Kontakte (C2, C3, C7), die eine Kontaktbelegung eines ersten Kommunikationsprotokolls bilden, und von den ersten Kontakten (C2, C3, C7) verschiedene zweite Kontakte (C4, C6, C8) umfasst, sowie eine Steuereinrichtung, die eingerichtet ist, eine an dem Kontaktfeld (2) anliegende erste Kontaktbelegung eines zweiten Kommunikationsprotokolls anhand eines der zweiten Kontakte (C6) zu erkennen, **dadurch gekennzeichnet, dass** die Steuereinrichtung weiterhin eingerichtet ist, eine an dem Kontaktfeld (2) anliegende zweite Kontaktbelegung des zweiten Kommunikationsprotokolls (MMC) anhand eines der ersten Kontakte (C3) zu erkennen, wobei die zweite Kontaktbelegung durch den einen der ersten Kontakte (C3) und zumindest einen der zweiten Kontakte (C4, C8) gebildet wird.

14. Datenträger (1) nach Anspruch 13, **dadurch gekennzeichnet, dass** die Steuereinrichtung (3) eingerichtet ist, eine an dem Kontaktfeld (2) des Datenträgers (1) anliegende Kontaktbelegung eines dritten Kommunikationsprotokolls anhand eines der zweiten Kontakte (C6) zu erkennen, wobei die anliegende Kontaktbelegung des dritten Kommunikationsprotokolls zumindest einen Kontakt (C6) mit der ersten Kontaktbelegung des zweiten Kommunikationsprotokolls gemeinsam hat.

15. Datenträger (1) nach Anspruch 13, **dadurch gekennzeichnet, dass** der Datenträger eingerichtet ist zur Ausführung eines Verfahrens nach einem der Ansprüche 2-12.

## Claims

1. A method for recognizing a contact assignment of a second communication protocol, said contact assignment being present at a contact pad (2) of a portable data carrier (1), wherein the contact pad (2) comprises first contacts (C2, C3, C7) forming a contact assignment of a first communication protocol, and second contacts (C4, C6, C8) different from said first contacts (C2, C3, C7), comprising the step of
- recognizing a first contact assignment of the second communication protocol present at the contact pad (2) by one of the second contacts (C6),
**characterized by** the step of
- recognizing a second contact assignment of the second communication protocol present at the contact pad (2) by one of the first contacts (C3), wherein the second contact assignment is formed by said one of the first contacts (C3) and at least one of the second contacts (C4, C8).

2. The method according to claim 1, **characterized by** the step of recognizing a contact assignment of a third communication protocol, said contact assignment being present at the contact pad (2) of the data carrier (1), by one of the second contacts (C6), wherein the present contact assignment of the third communication protocol has at least one contact (C6) in common with the first contact assignment of the second communication protocol.

3. The method according to claim 1 or 2, **characterized in that** the contacts forming a contact assignment of one of the communication protocols recognized as being present at the contact pad (2) are activated when said contacts do not collide with already activated contacts forming another present contact assignment of another one of the communication protocols.

4. The method according to claim 3, **characterized in that** the communication protocols comprise contact-type and at least one contactless communication protocol, and, while contacts forming a contact assignment of a contact-type communication protocol are activated, other contacts forming another contact assignment of another contact-type communication protocol recognized as being present at the contact pad are activated only when said other contacts do not collide with contacts forming a contact assignment of a contactless communication protocol.

5. The method according to any of claims 1 to 4, **characterized in that** the contact pad (2) of the data carrier (1) is a contact pad (2) according to ISO 7816-2, whose C2 contact, C3 contact and C7 contact form the first contacts and whose C4 contact, C6 contact and C8 contact form the second contacts, wherein a contact assignment of one of the communication protocols present at the contact pad (2) is recognized by monitoring of a voltage of certain contacts of the contact pad (2) after the switch-on of the portable data carrier (1).

6. The method according to claim 5 with 2, **characterized in that** the third communication protocol is a contactless SWP communication protocol, whose contact assignment is recognized by a voltage modulation at the C6 contact of the contact pad (2).

7. The method according to claim 5 or 6, **characterized in that** the first communication protocol is a contact-type ISO communication protocol, whose contact assignment is recognized by the C3 contact and the C2 contact.

8. The method according to any of claims 5 to 7, **characterized in that** the second communication protocol is a contact-type MMC communication protocol, whose first contact assignment is recognized by a clock signal of the MMC communication protocol present at the C6 contact of the contact pad (2) and whose second contact assignment is recognized by a clock signal of the MMC communication protocol present at the C3 contact of the contact pad (2).

9. The method according to any of claims 5 to 7, **characterized in that** the second communication protocol is a contact-type MMC communication protocol, whose first contact assignment is recognized by the correct decoding of a signal received at C4 or C8, when said signal is scanned in synchronism with the clock signal present at the C6 contact of the contact pad (2), and whose second contact assignment is recognized by the correct decoding of a signal received at C4 or C8, when said signal is scanned in synchronism with the clock signal present at the C3 contact of the contact pad (2).

10. The method according to claim 8 or 9, **characterized in that** the C4 contact, the C8 contact and the C6 contact for the clock signal are activated as the contacts forming the first contact assignment of the MMC communication protocol when the first contact assignment of the MMC communication protocol is recognized as the only contact assignment present at the contact pad (2).

11. The method according to claim 8, 9 or 10, **characterized in that** the C4 contact, the C8 contact and the C3 contact for the clock signal are activated as the contacts forming the second contact assignment of the MMC communication protocol when the second contact assignment of the MMC communication protocol is recognized as a contact assignment present at the contact pad (2).

12. The method according to any of claims 1 to 11, **characterized in that** the method is executed on a chip card as the portable data carrier (1).

13. A portable data carrier (1) comprising a contact pad (2) comprising first contacts (C2, C3, C7) forming a contact assignment of a first communication protocol, and second contacts (C4, C6, C8) different from said first contacts (C2, C3, C7), as well as a control device which is adapted to recognize a first contact assignment of a second communication protocol, said contact assignment being present at the contact pad (2), by one of the second contacts (C6), **characterized in that** the control device is further adapted to recognize a second contact assignment of the second communication protocol (MMC), said contact assignment being present at the contact pad (2), by one of the first contacts (C3), wherein the second contact assignment is formed by said one of the first contacts (C3) and at least one of the second contacts (C4, C8).

14. The data carrier (1) according to claim 13, **characterized in that** the control device (3) is adapted to recognize a contact assignment of a third communication protocol, said contact assignment being present at the contact pad (2) of the data carrier (1), by one of the second contacts (C6), wherein the present contact assignment of the third communication protocol has at least one contact (C6) in common with the first contact assignment of the second communication protocol.

15. The data carrier (1) according to claim 13, **characterized in that** the data carrier is adapted for executing a method according to any of claims 2-12.

## Revendications

1. Procédé de reconnaissance d'une occupation des contacts d'un deuxième protocole de communication présente à un champ de contact (2) d'un support de données portable (1), le champ de contact (2) comprenant des premiers contacts (C2, C3, C7) qui constituent une occupation des contacts d'un premier protocole de communication, et des deuxièmes contacts (C4, C6, C8) différents des premiers contacts (C2, C3, C7), comprenant l'étape de la
- reconnaissance, au moyen d'un des deuxièmes contacts (C6), d'une première occupation des contacts du deuxième protocole de communication présente au champ de contact (2),
**caractérisé par** l'étape de la
- reconnaissance, au moyen d'un des premiers contacts (C3), d'une deuxième occupation des contacts du deuxième protocole de communication présente au champ de contact (2), la deuxième occupation des contacts étant constituée par le un des premiers contacts (C3) et au moins par un des deuxièmes contacts (C4, C8).

2. Procédé selon la revendication 1, **caractérisé par** l'étape de la reconnaissance, au moyen d'un des deuxièmes contacts (C6), d'une occupation des contacts d'un troisième protocole de communication présente au champ de contact (2) du support de données (1), l'occupation des contacts présente du troisième protocole de communication ayant au moins un contact (C6) en commun avec la première occupation des contacts du deuxième protocole de communication.

3. Procédé selon la revendication 1 ou 2, **caractérisé en ce que** les contacts qui constituent une occupation des contacts d'un des protocoles de communication reconnue en tant que présente au champ de contact (2) sont activés quand ces contacts n'entrent pas en collision avec des contacts déjà activés qui constituent une autre présente occupation des contacts d'un autre des protocoles de communication.

4. Procédé selon la revendication 3, **caractérisé en ce que** les protocoles de communication comprennent des protocoles de communication avec contact et au moins un sans contact, et **en ce que**, pendant que des contacts qui constituent une occupation des contacts d'un protocole de communication avec contact sont activés, d'autres contacts qui constituent une autre occupation des contacts d'un autre protocole de communication avec contact reconnue en tant que présente au champ de contact (2) ne sont activés que quand ces autres contacts n'entrent pas en collision avec des contacts qui constituent une occupation des contacts d'un protocole de communication sans contact.

5. Procédé selon la revendication de 1 à 4, **caractérisé en ce que** le champ de contact (2) du support de données (1) est un champ de contact (2) selon ISO 7816-2 dont le contact C2, le contact C3 et le contact C7 constituent les premiers contacts et dont le contact C4, le contact C6 et le contact C8 constituent les deuxièmes contacts, une présente occupation des contacts d'un des protocoles de communication au champ de contact (2) étant reconnue par surveillance d'une tension de certains contacts du champ de contact (2) après la mise en marche du support de données portable (1).

6. Procédé selon la revendication 5 avec 2, **caractérisé en ce que** le troisième protocole de communication est un protocole de communication SWP sans contact dont l'occupation des contacts est reconnue au moyen d'une modulation de tension au contact C6 du champ de contact (2).

7. Procédé selon la revendication 5 ou 6, **caractérisé en ce que** le premier protocole de communication est un protocole de communication ISO avec contact dont l'occupation des contacts est reconnue au moyen du contact C3 et du contact C2.

8. Procédé selon une des revendications de 5 à 7, **caractérisé en ce que** le deuxième protocole de communication est un protocole de communication MMC avec contact dont la première occupation des contacts est reconnue au moyen d'un signal d'horloge du protocole de communication MMC présent au contact C6 du champ de contact (2) et dont la deuxième occupation des contacts est reconnue au moyen d'un signal d'horloge du protocole de communication MMC présent au contact C3 du champ de contact (2).

9. Procédé selon une des revendications de 5 à 7, **caractérisé en ce que** le deuxième protocole de communication est un protocole de communication MMC avec contact dont la première occupation des contacts est reconnue au moyen du décodage correct d'un signal arrivant à C4 ou C8 quand ce dernier est échantillonné de manière synchrone au signal d'horloge présent au contact C6 du champ de contact (2), et dont la deuxième occupation des contacts est reconnue au moyen du décodage correct d'un signal arrivant à C4 ou C8 quand ce dernier est échantillonné de manière synchrone au signal d'horloge présent au contact C3 du champ de contact (2).

10. Procédé selon la revendication 8 ou 9, **caractérisé en ce que** le contact C4, le contact C8 et le contact C6 sont activés pour le signal d'horloge en tant que les contacts constituant la première occupation des contacts du protocole de communication MMC quand la première occupation des contacts du protocole de communication MMC est reconnue en tant que seule occupation des contacts présente au champ de contact (2).

11. Procédé selon la revendication 8, 9 ou 10, **caractérisé en ce que** le contact C4, le contact C8 et le contact C3 sont activés pour le signal d'horloge en tant que les contacts constituant la deuxième occupation des contacts du protocole de communication MMC quand la deuxième occupation des contacts du protocole de communication MMC est reconnue en tant qu'occupation des contacts présente au champ de contact (2).

12. Procédé selon une des revendications de 1 à 11, **caractérisé en ce que** le procédé est exécuté sur une carte à puce en tant que support de données portable (1).

13. Support de données portable (1) comprenant un champ de contact (2) qui comprend des premiers contacts (C2, C3, C7) qui constituent une occupation des contacts d'un premier protocole de communication, et des deuxièmes contacts (C4, C6, C8) différents des premiers contacts (C2, C3, C7), ainsi qu'une dispositif de commande conçu pour reconnaître, au moyen d'un des deuxièmes contacts (C6), une première occupation des contacts d'un deuxième protocole de communication présente au champ de contact (2), **caractérisé en ce que** le dispositif de commande est en outre conçu pour reconnaître, au moyen d'un des premiers contacts (C3), une deuxième occupation des contacts du deuxième protocole de communication (MMC) présente au champ de contact (2), la deuxième occupation des contacts étant constituée par le un des premiers contacts (C3) et par au moins un des deuxièmes contacts (C4, C8).

14. Support de données (1) selon la revendication 13, **caractérisé en ce que** le dispositif de commande (3) est conçu pour reconnaître, au moyen d'un des deuxièmes contacts (C6), une occupation des contacts d'un troisième protocole de communication présente au champ de contact (2) du support de données (1), l'occupation des contacts présente du troisième protocole de communication ayant au moins un contact (C6) en commun avec la première occupation des contacts du deuxième protocole de communication.

15. Support de données (1) selon la revendication 13, **caractérisé en ce que** le support de données est conçu pour exécuter un procédé selon une des revendications de 2 à 12.
